# EUROPÄISCHE PATENTSCHRIFT

(11) **EP 3 215 352 B1**
(45) Veröffentlichungstag und Bekanntmachung des Hinweises auf die Patenterteilung: **21.08.2019**
(21) Anmeldenummer: 15794107.1
(22) Anmeldetag: 30.10.2015
(51) Int. Cl.: B29C 64/112, B33Y 70/00, B33Y 10/00

(54) **VERFAHREN ZUR HERSTELLUNG VON SILICONELASTOMERTEILEN**
METHOD FOR PRODUCING SILICONE ELASTOMER PARTS
PROCÉDÉ DE PRODUCTION DE PIÈCES D'ÉLASTOMÈRES DE SILICONE

(30) Priorität: 06.11.2014 DE 102014222685
(43) Veröffentlichungstag der Anmeldung: 13.09.2017
(73) Patentinhaber: Wacker Chemie AG, 81737 München (DE)
(72) Erfinder: SELBERTINGER, Ernst, 84489 Burghausen (DE); ACHENBACH, Frank, 84359 Simbach (DE); PACHALY, Bernd, 84561 Mehring (DE)
(74) Vertreter: Bitterlich, Bianca
(86) Internationale Anmeldenummer: PCT/EP2015/075329
(87) Internationale Veröffentlichungsnummer: WO 2016/071241

(56) Entgegenhaltungen:
- EP-A1- 2 676 633
- WO-A1-2013/091003

## Beschreibung

Die Erfindung betrifft ein generatives Verfahren zur Herstellung von elastomeren Formkörpern aus vernetzbaren Siliconmassen mittels elektromagnetischer Strahlung, welches dadurch gekennzeichnet ist, dass der elastomere Formkörper schrittweise aufgebaut wird, indem wiederholt kleine Portionen der vernetzbaren Siliconmasse präzise platziert und mittels elektromagnetischer Strahlung vernetzt werden.

### Stand der Technik

Für die Herstellung von elastomeren Formteilen ausgehend von vernetzbaren Siliconkautschukmassen stehen zahlreiche Verarbeitungsverfahren zur Verfügung. Je nach Konsistenz und Vernetzungsmechanismus der Siliconkautschukmasse kann die Herstellung von Formteilen z.B. im Spritzguss, im Pressformverfahren, im Extrusionsverfahren, durch Kalandrieren, Vergießen etc. erfolgen. Die Eigenschaften des gebildeten Siliconformteils (Härte, Reißfestigkeit, Dehnbarkeit, Farbe etc.) werden im Wesentlichen durch die stoffliche Zusammensetzung der vernetzbaren Siliconkautschukmasse (ferner durch die Verarbeitungsbedingungen wie Druck und Temperatur) bestimmt, d.h., diese Verfahren liefern typischerweise bzgl. der mechanischen und optischen Eigenschaften weitgehend isotrope Siliconformteile in hoher Stückzahl.

Die bestehenden Verfahren stoßen jedoch zunehmend an ihre Grenzen, wenn Siliconformteile komplexerer Geometrie, unterschiedlicher Materialzusammensetzung und/oder variabler Eigenschaftsprofile benötigt werden. Die Herstellung dafür geeigneter z.B. Spritzgussformen wird zunehmend aufwändiger und teurer oder ist prinzipell nicht möglich. Derartige Anforderungsprofile bestehen beispielsweise auf dem Gebiet der Exo- und Endoprothesen und insbesondere Epithesen (z.B. künstliche Ohrmuschel, deren weichere und härtere Stellen (Haut, Knorpel) kontinuierlich ineinander übergehen). Auch können sehr komplexe Strukturen, wie die aus der Bionik bekannten, mittels der herkömmlichen Verarbeitungsverfahren nicht realisiert werden. Der allgemeine Trend hin zur Individualisierung und individuellen Anpassung von Gebrauchsartikeln bedingt zudem kleinere Stückzahlen, wodurch die Effizienz konventioneller Verfahren nicht mehr gegeben ist. Gleiches gilt für die Herstellung von Prototypen.

Ein zunehmend an Bedeutung gewinnendes Verfahren zur Herstellung von Formteilen ist das Generative Fertigungsverfahren (*Additive Manufacturing*; 3D-Druck Verfahren), welches zahlreiche unterschiedliche Techniken umfasst, denen ein automatisierter additiver Schichtaufbau des Formteils gemeinsam ist (A. Gebhardt, Generative Fertigungsverfahren, Carl Hanser Verlag, München 2013). Voraussetzung aller generativen Herstellverfahren ist die Darstellung der Geometrie sowie ggf. weiterer Eigenschaften (Farbe, Materialzusammensetzung) des gewünschten Formkörpers in Form eines digitalen 3D Datensatzes, welcher als virtuelles Modell des Formkörpers verstanden werden kann. Diese Modellierung erfolgt vorzugsweise mittels diverser 3D CAD-Konstruktionsverfahren (*computer-aided design*). Als Eingangsdaten für die Erstellung eines 3D CAD-Modells können auch 3D-Messdaten dienen, wie diese z.B. aus CT-Messungen (Computer Tomographie) oder MRT-Messungen (Magnet Resonanz Tomographie) resultieren. Der 3D CAD-Datensatz muss nachfolgend durch material-, verfahrens- und anlagenspezifische Daten ergänzt werden, was dadurch erfolgt, dass dieser über eine Schnittstelle (Interface) in einem geeigneten Format (z.B. STL-, CLI/SLC-, PLY-, VRML-, AMF-Format) an eine Additive Manufacturing Software übergeben wird. Diese Software erzeugt aus den geometrischen Informationen letztlich virtuelle Einzelschichten (*slicen*), wobei die optimale Orientierung des Bauteils im Bauraum, Stützstrukturen etc. Berücksichtigung erfahren. Der vollständige Datensatz erlaubt dann die direkte Ansteuerung der für die generative Fertigung eingesetzten Maschine (3D Drucker).

Der Software-Ablauf ist wie folgt:
1. Konstruktion des Bauteils im CAD-Format
2. Export in das STL-Datenformat
3. Aufteilung des 3D-Modells in Schichten parallel zur Druckebene und Generierung des GCode
4. Übertragung des GCode an die Druckersteuerung

Generative Fertigungsverfahren stehen für zahlreiche Materialien sowie deren Kombinationen zur Verfügung (z.B. Metalle, Kunststoffe, Keramiken, Gläser).

Eine dieser Techniken ist das Stereolithographie-Verfahren, beispielsweise beschrieben in WO93/08506 A1 und WO95/25003 A1, bei welchem eine strahlungshärtende niedrigviskose Kunststoffmasse in dünner Schicht auf eine Trägerplatte aufgebracht und durch computer-gesteuerte Bestrahlung ausgewählter Bereiche der x,y-Ebene (Laser oder Strahlungsquelle mit Maske) lokal ausgehärtet wird. Nach Aufbringung der nächsten dünnen Schicht (typischerweise durch justiertes Absenken/Eintauchen der auf der Trägerplatte befindlichen bereits vernetzten Schicht in ein Bad bestehend aus der unvernetzten flüssigen Kunststoffmasse) wiederholt sich dieser Vorgang, wodurch der Formkörper Schicht für Schicht in z-Richtung aufgebaut wird. Das Aufbringen der jeweils unvernetzten Folgeschicht mit definierter Schichtdicke kann z. B. durch ein Rakelmesser oder eine Breitschlitzdüse bewerkstelligt werden. Abschließend wird die nichtvernetzte Kunststoffmasse ggf. unter Zuhilfenahme eines Lösungsmittels und Ultraschall von dem gebildeten Formkörper entfernt. Ein solches Verfahren wird auch in DE 199 50 284 A1 beschrieben, wobei die im sichtbaren Licht durch radikalische Polymerisation aushärtende Masse u.a. eine einen Initiator enthaltende Siliconharzmasse sein kann, insbesondere vom Ormocer®-Typ. Die Siliconharzmasse kann Füllstoffe enthalten und folglich auch von pastöser Konsistenz sein. In diesem Fall kann das Aufbringen der einzelnen Schichten durch ein Walzensystem erfolgen. Nachteilig ist, dass das Aufbringen hochviskoser Massen mittels eines Walzensystems hochstabile, flächige Substrukturen voraussetzt, eine Voraussetzung, die weichelastische Substrukturen im Allgemeinen nicht erfüllen. Auch WO 96/30182 beschreibt die Herstellung eines Formkörpers im Stereolithographie-Verfahren ausgehend von einer einen kationischen Photoinitiator enthaltenden epoxy-funktionellen Siliconmasse, deren Aushärtung mit Hilfe eines UV-Lasers erfolgt. Die eingesetzten epoxy-funktionellen Monomere und Oligomere liefern harte Formkörper mit einer Glasübergangstemperatur > 250°C. Als nachteilig muss neben der toxikologischen Bedenklichkeit kationischer Photoinitiatoren (Oniumsalze) und Photosensibilisatoren (kondensierte Aromaten) die benötigte hohe Funktionsdichte des Silicones an Epoxygruppen gewertet werden. Zudem erfordert das Stereolithographie-Verfahren relativ niedrigviskose Kunststoffmassen (typischerweise < 0,3 Pa.s), um eine gute Nivellierung der neu aufgebrachten, wenige hundert µm dünnen Schichten zu gewährleisten. Die Herstellung weich-elastischer Formkörpern mit guter mechanischer Festigkeit bedingt jedoch die Verwendung langkettiger Siliconpolymere in Kombination mit verstärkenden Füllstoffen, was zwangsläufig zu vergleichsweise hochviskosen Siliconkautschukmassen (> 100 Pa.s) führt. Zudem ist es wünschenswert, die physiologisch unbedenklichen additionsvernetzbaren Siliconkautschukmassen zur Herstellung der Formkörper einzusetzen; diese vernetzen durch Platin-katalysierte Additionsreaktion von SiH-Gruppen haltigen Siloxanvernetzern an vinyl-funktionelle Polysiloxane (Hydrosilylierung). Die Kombination der thermisch oder durch UV-Licht initiierten Additionsvernetzung mit den voranstehend beschriebenen Stereolithographie-Verfahren ist problematisch, da selbst bei starker Fokussierung des bestrahlten und damit aktivierten Bereiches (mittels eines IR- oder UV-Lasers) auch die unmittelbare Umgebung durch Diffusion des aktivierten Platin-Katalysators, durch Thermoleitfähigkeit und durch die starke Exothermie der Additionsvernetzung zumindest anvernetzt wird, was zum einen die gesamte Siliconkautschukmasse im Bad unbrauchbar macht und zum anderen eine klebrige, schlecht abgegrenzte Oberfläche des Formkörpers zur Folge hat.
Auch das in DE 100 24 618 A1 offengelegte Verfahren zum Erzeugen dreidimensionaler Gegenstände aus wärmeempfindlichen Zusammensetzungen (erwähnt werden u.a. Siliconkautschukharze), welches sich dadurch auszeichnet, dass der Formkörper durch fokussiertes Führen eines Lichtstrahls (Brennfleck eines IR-Lasers) in drei Dimensionen innerhalb des Badvolumens einer thermisch vernetzbaren flüssigen Kunststoffmasse, die notwendigerweise transparent sein muss, gebildet wird, vermag das voranstehende Problem nicht zu lösen. Zudem ist die Herstellung eines weich-elastischen Formkörpers an das Vorhandensein geeigneter Stützstrukturen gebunden, welche in diesem Verfahren nicht simultan aufgebaut werden können. Verfeinerte Varianten dieses Verfahrens werden in DE 101 11 422 A1 und DE 101 52 878 B4 beschrieben. DE 101 52 878 B4 beschreibt die Herstellung dreidimensionaler Formkörper oder Strukturen auf Oberflächen durch ortsselektives Verfestigen eines organo-funktionellen Siliconharzes innerhalb eines Bades aus diesem Material mit Hilfe von Zwei- oder Mehrphotonen-Polymerisation (A. Ostendorf, B.N. Chichov, Photonics Spectra 2006, 10, 72-80). Die verwendeten Flüssigsiliconharze enthalten organofunktionelle Gruppen, die eine (radikalische) Zwei- oder Mehrphotonen-Polymerisation ermöglichen (z.B. Methacrylgruppen), wobei die für Mehrphotonenprozesse benötigte hohe Strahlungsintensität durch Fokussierung eines Ultrakurzzeit-gepulsten (N)IR-Laserstrahls (ggf. nach vorausgegangener Strahlaufweitung) erzeugt wird. Der Vorteil besteht darin, dass die für den Mehrphotonenprozess benötigte Strahlungsintensität nur innerhalb des Fokusbereiches erreicht wird, während das Material in der Umgebung lediglich eine Einphotonanregung erfährt, durch welche der Polymerisationsschritt, also die Aushärtung, nicht initiiert werden kann. Das Verfahren eignet sich vor allem zur Herstellung formgenauer substratgestützter oder selbsttragender Strukturen vorzugsweise im µm-Bereich, bestehend aus hochvernetzten, harten (ORMOCER®-artigen) Organo-Silikaten, nicht aber weich-elastischen Siliconelastomeren.
Insgesamt kann festgestellt werden, dass die Herstellung gummielastischer Siliconformkörper gemäß der voranstehenden Stereolithographie-artigen Verfahren aufgrund der aufgeführten Unzulänglichkeiten ungeeignet ist.

Den voranstehend aufgeführten generativen Verfahren ist gemeinsam, dass das den Formkörper bildende unvernetzte Material nicht selektiv auf Bereiche einer Arbeitsfläche aufgebracht wird (bzw. als Bad vorliegt), sondern auch in Bereichen vorliegt, die nicht Teil des Formkörpers werden. Erst durch das sich anschließende selektive Aushärten wird ein Teil der aufgebrachten oder vorhandenen Masse zum Bestandteil des Formteils. Eine sich davon unterscheidende Ausführungsform des Stereolithographie-Verfahrens besteht darin, die vernetzbare Masse selektiv nur an jenen Orten zu platzieren, die Teil des Formkörpers werden. Die sich anschließende Vernetzung kann dann selektiv (z.B. mittels eines Lasers) oder nicht selektiv (z.B. durch flächige Bestrahlung mit einer Lampe) erfolgen.

Das ortsselektive Aufbringen der vernetzbaren Masse kann z.B. mittels Extrusion erfolgen. In DE 10 2012 204 494 A1 wird die Herstellung einer Primärauflage aus Silicon zur Wundversorgung beschrieben, die u.a. im 3D-Druck Verfahren erfolgen kann. Die Primärauflage besitzt die Form eines Gitters oder Netzes, welches in Analogie zum Filament-3D-Druck durch mäanderförmiges kontinuierliches Extrudieren von Siliconkautschukmassen durch eine Düse und anschließende Vernetzung gebildet wird.

Das ortsselektive Aufbringen der vernetzbaren Masse erfolgt vorzugsweise durch sogenannte ballistische Verfahren, die sich dadurch auszeichnen, dass das vernetzbare Material mit Hilfe eines Druckkopfes in Form einzelner Tröpfchen diskontinuierlich an der gewünschten Stelle der Arbeitsebene aufgebracht wird (*Jetting*). DE 10 2011 012 412 A1 und DE 10 2011 012 480 A1 beschreiben eine Vorrichtung sowie ein Verfahren zur schrittweisen Herstellung von 3D-Strukturen mit einer Druckkopfanordnung mit wenigstens zwei, vorzugsweise 50 bis 200 Druckkopfdüsen, welche das ortsselektive Aufbringen ggf. mehrerer photovernetzbarer Materialien mit unterschiedlicher Photoempfindlichkeit ermöglicht, wobei die photovernetzbaren Materialien anschließend ortsselektiv durch elektromagnetische Strahlung, insbesondere durch Zweiphotonen- oder Mehrphotonenprozesse im Fokusbereich eines Lasers, verfestigt werden. Das Aufbringen der photovernetzbaren Materialien mittels Inkjetdruck stellt an die Viskosität der photovernetzbaren Materialien spezielle Anforderungen. So zeichnen sich die photovernetzbaren Materialien durch eine Viskosität von weniger als 200 mPa.s, insbesondere weniger als 80 mPa.s, besonders bevorzugt weniger als 40 mPa.s aus. Um eine ausreichende Vernetzung des aufgebrachten Materials mittels Zwei- bzw. Mehrphotonenpolymerisation zu erzielen, bedarf es auf die Laserwellenlänge abgestimmter Photoinitiatoren und einer photovernetzbare Gruppen enthaltenden polymeren Vernetzer-Komponente, wobei die photovernetzbaren Gruppen der Klasse der Acrylate, Methacrylate, Acrylamide, Methylacrylamide, Urethanacrylate, Urethanmethacrylate, Ureaacrylate und Ureamethacrylate angehören. Das beschriebene Verfahren eignet sich jedoch nicht zur Herstellung von Formteilen bestehend aus Siliconelastomeren. Zum einen sind die verwendeten Photoinitiatoren, Photosensitizer, Coinitiatoren etc. in den (unpolaren) Siliconmassen nur schlecht löslich, was zu Trübungen, Mikrophasenseparation und Inhomogenitäten führt. Die radikalische Härtung von mit den voranstehend genannten photovernetzbaren Gruppen funktionalisierten Siliconen weist bekanntermaßen das Problem der durch Sauerstoff verursachten Inhibierung auf, wodurch die Vernetzungsgeschwindigkeit erheblich herabgesetzt wird und klebrige Oberflächen resultieren. Steuert man diesem Effekt durch Erhöhung der Funktionsdichte an z.B. Acrylatgruppen entgegen, resultieren nichtelastische, spröde Vulkanisate. Schließlich setzt die für eine Mehrphotonenpolymerisation (insbesondere bedingt durch die niedrige Funktionsdichte an photopolymerisierbaren Gruppen) benötigte, durch gepulste Femtosekundenlaser erzeugte extrem hohe lokale Photonendichte Zersetzungsreaktionen (Carbonisierung) im Silicon in Gang, was zu inakzeptablen Verfärbungen und Materialschädigungen führt.

WO 2013/091003 A1 beschreibt eine Vorrichtung sowie ein Verfahren zur Herstellung von 3D-Strukturen aus Silicon mit einer Druckkopfanordnung.

Insgesamt kann festgestellt werden, dass keine der dem Stand der Technik entsprechenden Verfahren und Vorrichtungen geeignet sind, um effizient und effektiv qualitativ hochwertige Formteile aus Siliconelastomeren im generativen Fertigungsverfahren herzustellen.

Aufgabe war daher die Bereitstellung eines generativen Fertigungsverfahrens und einer dafür geeigneten Vorrichtung zur effizienten Herstellung von individualisierten, qualitativ hochwertigen Siliconelastomerformteilen, welche die oben genannten Nachteile nicht aufweisen.

Diese Aufgabe wird überraschenderweise durch das erfindungsgemäße Verfahren nach Anspruch 1 gelöst.

Die Viskosität der Silikonkautschukmassen wird mittels der nachstehend beschriebenen Messmethode bestimmt. Auch in den Beispielen wurden die Viskositäten analog bestimmt. Es wurde ein Rheometer "MCR 302" der Fa. Anton Paar; Graz, Österreich verwendet und nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt, Braunschweig, Deutschland. Die Messtemperatur beträgt 25,00°C +/- 0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen (siehe auch Angaben in Tabelle 2). Der bei den Viskositätsmessungen verwendete Schergeschwindigkeitsgradient (Scherrate) betrug üblicherweise jeweils 0,5 s⁻¹ sowie je nach eingesetzter Siliconkautschukmasse 10, 25 oder 100 s-1 (siehe auch Angaben in Tabelle 2).

Scherverdünnendes Verhalten der Siliconkautschukmassen, wie es füllstoffhaltige Siliconkautschukmassen aufweisen, wirkt sich bei der im erfindungsgemäßen Verfahren eingesetzten Mikrotröpfchendosierung besonders vorteilhaft aus. Durch die im Dosierventil während des Jetting-Dosiervorgangs auftretende hohe Schergeschwindigkeit wird die Viskosität solcher füllstoffhaltigen Siliconkautschukmassen stark erniedrigt und ermöglicht dadurch das Jetting-Dosieren von sehr feinen Mikrotröpfchen (6). Nach der Abscheidung des Mikrotropfens (6) auf dem Substrat (3) verringert sich dessen Schergeschwindigkeit schlagartig, wodurch seine Viskosität sofort wieder ansteigt. Dadurch wird der abgeschiedene Tropfen (6) sofort wieder hochviskos und ermöglicht den formgenauen Aufbau dreidimensionaler Strukturen.

Die im erfindungsgemäßen Verfahren verwendeten Silikonkautschukmassen zeigen eine Viskosität bei 25°C und einer Scherrate von 0,5 s⁻¹ von bevorzugt mindestens 40, besonders bevorzugt mindestens 100 und insbesondere bevorzugt mindestens 200 Pa.s.

Sowohl die Jetting-Vorrichtung (1) als auch die Quelle für elektromagnetische Strahlung (2) sowie die Basisplatte (3) sind räumlich unabhängig steuerbar. Dies bedeutet, dass die entsprechende Vorrichtung in alle drei Raumrichtungen x, y und z, also dreidimensional, ortsselektiv bewegt werden kann.

In einer weiteren Ausführungsform erfolgt das Abscheiden des Tropfens (6) und seine Vernetzung oder Anvernetzung (7) aneinandergekoppelt oder sogar zeitgleich.

Das erfindungsgemäße Verfahren wird auf einer Fertigungsanlage durchgeführt, die mindestens folgenden Komponenten enthält:
- eine räumlich unabhängig steuerbare Jetting-Vorrichtung (1), enthalten mindestens ein Reservoir (4) und mindestens eine Jetting-Düse (5),
- eine räumlich unabhängig steuerbare Quelle für elektromagnetische Strahlung (2),
- eine räumlich unabhängig steuerbare Basisplatte (3).

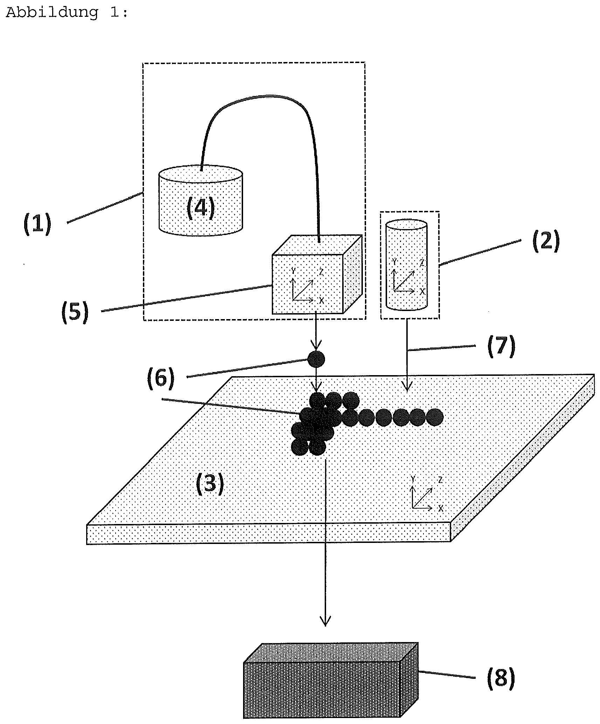

Abbildung 1 zeigt ein schematisches Beispiel für eine generative Fertigungsanlage, welche im erfindungsgemäßen Verfahren für die Herstellung von Siliconelastomerteilen (8) eingesetzt wird. Die durch elektromagnetische Strahlung vernetzbare Siliconkautschukmasse befindet sich im Reservoir (4) einer Jetting-Vorrichtung (1), welches mit Druck beaufschlagt ist und über eine Dosierleitung mit einer Dosierdüse (5) verbunden ist. Dem Reservoir (4) können Einrichtungen vor- oder nachgeschaltet sein, die es ermöglichen, mehrkomponentige Siliconkautschukmassen homogen zu vermischen und/oder gelöste Gase durch Evakuieren zu entfernen. Es können mehrere unabhängig voneinander arbeitende Jetting-Vorrichtungen (1) vorhanden sein, um das Formteil (8) aus unterschiedlichen Siliconkautschukmassen aufzubauen, Compositteile aus Siliconelastomeren und anderen Kunststoffen zu ermöglichen oder im Fall komplexerer Strukturen ggf. notwendig werdende Stützstrukturen aus geeigneten Materialien zu realisieren.

Die einzelnen Dosierdüsen (5) können in x-, y- und z-Richtung akkurat positioniert werden, um ein zielgenaues Abscheiden der Siliconkautschuktropfen (6) auf der Basisplatte (3), die vorzugsweise beheizbar ist und ebenfalls unabhängig in x-, y- und z-Richtung positioniert werden kann, bzw. im späteren Verlauf der Formteilentstehung auf der bereits platzierten und ggf. bereits vernetzten Siliconkautschukmasse zu ermöglichen.

Bevorzugt werden zur Positionierung der Dosierdüsen (5) Verfahreinheiten mit hoher Wiederholgenauigkeit verwendet. Die zum Positionieren der Dosierdüsen (5) verwendete Verfahreinheit hat eine Genauigkeit von mindestens ± 100 µm, vorzugsweise von mindestens ± 25 µm, jeweils in alle drei Raumrichtungen. Die maximale Geschwindigkeit der verwendeten Verfahreinheiten bestimmt maßgeblich die Herstellungszeit des Formteils (8) und sollte daher mindestens 0,01 m/s, bevorzugt mindestens 0,1 m/s, vorzugsweise mindestens 0,3 m/s, besonders bevorzugt mindestens 0,4 m/s betragen.

Bevorzugt werden Dosierdüsen (5), die ein Jetting flüssiger Medien mittlerer bis hoher Viskosität ermöglichen. Durch das erfindungsgemäße Verfahren können somit Siliconelastomerformteile (8) über Druckköpfe (5) in x-, y und z-Richtung tropfenweise aufgebaut werden, mit Siliconkautschukmassen die eine Viskosität größer 10 Pa.s, bevorzugt mindestens 40, besonders bevorzugt mindestens 100 und insbesondere bevorzugt mindestens 200 Pa.s (jeweils bei 25°C und einer Scherrate von 0,5 s⁻¹). Als solche kommen insbesondere (thermische) Bubble-Jet- und Piezo-Druckköpfe (5) in Frage, wobei Piezo-Druckköpfe (5) besonders bevorzugt sind. Letztere ermöglichen das Jetting sowohl niedrigviskoser Materialien, wobei Tropfenvolumen für Tropfen (6) von einigen wenigen Pikolitern (pL) (2 pL entsprechen einem Tropfendurchmesser von ca. 0,035 µm) realisiert werden können, als auch mittel- und hochviskoser Materialien wie der Siliconkautschukmassen, wobei Piezo-Druckköpfe (5) mit einem Düsendurchmesser zwischen 50 und 500 µm bevorzugt werden und Tropfenvolumen im Nanoliter-Bereich (1 bis 100 nL) erzeugt werden können. Mit niedrigviskosen Massen (< 100 mPa.s) können diese Druckköpfe (5) Tröpfchen (6) mit sehr hoher Dosierfrequenz abscheiden (ca. 1 - 30 kHz), während mit höherviskosen Massen (> 100 Pa.s) in Abhängigkeit von den rheologischen Eigenschaften (scherverdünnendes Verhalten) Dosierfrequenzen bis zu ca. 500 Hz erzielt werden können. Geeignete Düsen werden beispielsweise in DE 10 2011 108 799 A1 beschrieben.

Um eine Verschmutzung der Dosierdüsen (5) zu vermeiden bzw. zu beseitigen, kann die in Abb. 1 gezeigte erfindungsgemäße Anlage durch eine automatisch arbeitende Dosierdüsen-Reinigungsstation ergänzt werden.

Die Jetting-Vorrichtungen (1) können zudem über Temperiereinheiten verfügen, um das rheologische Verhalten der Siliconkautschukmassen zu konditionieren und/oder die Viskositätserniedrigung durch erhöhte Temperaturen für das Jetting auszunutzen.
In einer weiteren Ausführungsform erfolgt als zusätzlicher Schritt ein Tempern des hergestellten Formteils (8) bei Temperaturen von > 100 °C, bevorzugt bei 150 °C.

Falls ein Formteil (8) hergestellt werden soll, bei dem Gaseinschlüsse vermieden werden sollen, so erfolgt bevorzugt eine Entgasung der Siliconkautschukmassen beispielsweise durch Anlegen eines Vakuum am Reservoir (4) vor ihrer Verwendung.

Die gesamte in Abb. 1 skizzierte Anlage kann auch in einer Vakuumkammer oder Inertgaskammer untergebracht sein, z.B. um UV-C-Strahlungsverluste durch Sauerstoff auszuschließen oder um Lufteinschlüsse im Formteil (8) zu vermeiden.

Die Vernetzung (7) der Tropfen (6) für Tropfen (6) deponierten Siliconkautschukmasse erfolgt mittels einer oder mehrerer elektromagnetischer Strahlungsquellen (2) (z.B. IR-Laser, IR-Strahler, UV/VIS-Laser, UV-Lampe, LED), die ebenfalls über eine Verfahrmöglichkeit in x-, y- und z-Richtung verfügen. Die Strahlungsquellen (2) können über Umlenkspiegel, Fokussiereinheiten, Strahlaufweitungssysteme, Scanner, Blenden etc. verfügen. Deponieren und Vernetzen müssen aufeinander abgestimmt werden. Das erfindungsgemäße Verfahren umfasst sämtliche diesbezüglich denkbare Möglichkeiten. Beispielsweise kann es notwendig sein, zunächst einen flächigen Bereich der x,y-Arbeitsebene mit Siliconkautschuktropfen (6) zu belegen und eine Nivellierung (Ineinanderfließen) abzuwarten, um erst dann diesen Bereich flächig zu bestrahlen und zu vernetzen. Ebenso kann es sinnvoll sein, die aufgebrachte Fläche zwecks Konturierung zunächst nur im Randbereich zu verfestigen und anschließend den Innenbereich durch geeignete Schraffuren anzuvernetzen. Es kann auch notwendig sein, einzelne Tropfen (6) unmittelbar nach deren Platzierung zu vernetzen oder anzuvernetzen, um ein Verlaufen zu verhindern. Es kann zweckmäßig sein, den gesamten Arbeitsbereich während der Formteilbildung permanent zu bestrahlen, um vollständige Vernetzung zu erzielen, oder nur kurzzeitig der Strahlung auszusetzen, um gezielt eine unvollständige Vernetzung (Grünfestigkeit) herbeizuführen, was u.U. mit einer besseren Haftung der Einzelschichten untereinander einhergehen kann. Folglich wird es im Allgemeinen notwendig sein, die das Deponieren und Vernetzen bestimmenden Parameter in Abhängigkeit vom Vernetzungssystem, dem rheologischem Verhalten und den Haftungseigenschaften der Siliconkautschukmassen sowie ggf. der übrigen eingesetzten Materialien aufeinander abzustimmen.

Die im erfindungsgemäßen Verfahren bevorzugt verwendeten Siliconkautschukmassen vernetzen durch Hydrosilylierungreaktion (Additionsreaktion) zwischen Si-gebundenen Wasserstoffatomen und aliphatisch ungesättigten Gruppen, die sich vorzugsweise am Siliconpolymer befinden. Derartige Siliconkautschukmassen, die dem Fachmann z.B. als RTV-2 (*2-part Room Temperature Vulcanizing*) oder LSR (*Liquid Silicone Rubber*) hinreichend bekannt sind, werden beispielsweise in US 3,884,866 beschrieben. Da die vorzugsweise Platin-katalysierte Additionsreaktion bereits bei Raumtemperatur spontan abläuft, werden diese Siliconkautschukmassen typischerweise in Form zweier Komponenten angeboten, wobei eine Komponente den SiHfunktionellen Vernetzer und die andere Komponente den Platin-Katalysator enthält. Mit Hilfe inhibierend wirkender Zusätze oder durch Verwendung spezieller bei Raumtemperatur weitgehend inaktiver, jedoch thermisch aktivierbarer Platinkatalysatoren können aber auch einkomponentige Siliconkautschukmassen formuliert werden wie beispielsweise in EP 1 077 226 A1 beschrieben.

Die thermische Aktivierung additions-vernetzbarer Siliconkautschukmassen kann im erfindungsgemäßen Verfahren durch IR-Strahlung erfolgen, z.B. mittels eines (N)IR-Lasers oder einer Infrarotlampe.

Insbesondere stehen bei Abwesenheit von Licht bei Raumtemperatur weitgehend inaktive, jedoch durch UV/VIS-Strahlung aktivierbare Platin-Katalysatoren zur Verfügung, wodurch eine schnelle Additionsvernetzung bei Raumtemperatur ermöglicht wird.

Die im erfindungsgemäßen Verfahren besonders bevorzugten Siliconkautschukmassen vernetzen durch UV- oder UV-VIS-induzierte Additionsreaktion. Gegenüber einer thermischen Vernetzung hat die UV- oder UV-VIS-induzierte Vernetzung zahlreiche Vorteile. Zum einen können Intensität, Einwirkungszeit und Einwirkungsort der UV- oder UV-VIS-Strahlung genau bemessen werden, während das Aufheizen der tropfenweise abgeschiedenen Siliconkautschukmasse (wie auch deren anschließendes Abkühlen) durch die relativ geringe thermische Leitfähigkeit stets verzögert erfolgt. Aufgrund des intrinsisch sehr hohen thermischen Ausdehnungskoeffizienten der Silicone führen die bei thermischer Vernetzung zwangsläufig vorhandenen Temperaturgradienten zu mechanischen Spannungen, welche die Maßhaltigkeit des gebildeten Formteils negativ beeinflussen, was im Extremfall zu inakzeptablen Formverzerrungen führen kann. Ein weiterer Vorteil der UV/VISinduzierten Additionsvernetzung zeigt sich bei der Herstellung von Mehrkomponentenformteilen, wie beispielsweise Hart-Weich-Verbunden, die neben dem Siliconelastomer einen Thermoplasten enthalten, dessen thermisch bedingter Verzug vermieden wird.

UV/VIS-induzierte additions-vernetzende Siliconkautschukmassen werden beispielsweise in DE 10 2008 000 156 A1, DE 10 2008 043 316 A1, DE 10 2009 002 231 A1, DE 10 2009 027 486 A1, DE 10 2010 043 149 A1 und WO 2009/027133 A2 beschrieben. Die Vernetzung kommt durch UV/VIS-induzierte Aktivierung eines lichtempfindlichen Hydrosilylierungskatalysators zustande, wobei Komplexe des Platins bevorzugt sind. In der Fachliteratur werden zahlreiche lichtempfindliche Platinkatalysatoren beschrieben, die unter Lichtausschluss weitgehend inaktiv sind und durch Bestrahlung mit Licht mit einer Wellenlänge von 250-500 nm in bei Raumtemperatur aktive Platin-Katalysatoren überführt werden können. Beispiele hierfür sind (η-Diolefin)(σ-aryl)-Platinkomplexe (EP 0 122 008 A1; EP 0 561 919 B1), Pt(II)-β-diketonatkomplexe (EP 0 398 701 B1) und (η⁵-Cyclopentadienyl)tri(σ-alkyl)Platin(IV)-Komplexe (EP 0 146 307 B1, EP 0 358 452 B1, EP 0 561 893 B1). Besonders bevorzugt sind MeCpPtMe₃ sowie die sich davon durch Substitution der am Platin befindlichen Gruppen ableitenden Komplexe wie beispielsweise beschrieben in EP 1 050 538 B1 und EP 1 803 728 B1.

Die UV- oder UV-VIS-induziert vernetzenden Massen können ein- oder mehrkomponentig formuliert werden.

Die Geschwindigkeit der UV/VIS-induzierten Additionsvernetzung hängt von zahlreichen Faktoren ab, insbesondere von der Art und Konzentration des Platin-Katalysators, von der Intensität, Wellenlänge und Einwirkungszeit der UV/VIS-Strahlung, der Transparenz, Reflektivität, Schichtdicke und Zusammensetzung der Siliconkautschukmasse und der Temperatur.

Der Platin-Katalysator sollte vorzugsweise in einer katalytisch ausreichenden Menge eingesetzt werden, so dass eine hinreichend schnelle Vernetzung bei Raumtemperatur ermöglicht wird. Typischerweise werden 0,1 bis 500 Gew.-ppm des Katalysators bezogen auf den Gehalt des Pt-Metalls zur gesamten Siliconkautschukmasse verwendet, vorzugsweise 0,5-200 Gew.-ppm, besonders bevorzugt 1-50 Gew.-ppm.

Für die Aushärtung der UV/VIS-induziert additionsvernetzenden Siliconkautschukmasse wird Licht der Wellenlänge 240-500 nm, bevorzugt 250-400 nm, besonders bevorzugt 250 bis 350 nm eingesetzt. Um eine rasche Vernetzung zu erzielen, worunter eine Vernetzungszeit bei Raumtemperatur von weniger als 20 min, vorzugsweise weniger als 10 min., besonders bevorzugt weniger als 1 min. verstanden werden soll, empfiehlt sich die Verwendung einer UV/VIS-Strahlungsquelle mit einer Leistung zwischen 10 mW/cm² und 20.000 mW/cm², bevorzugt zwischen 30 mW/cm² und 15.000 mW/cm², sowie eine Strahlungsdosis zwischen 150 mJ/cm² und 20.000 mJ/cm², bevorzugt zwischen 500 mJ/cm² und 10.000 mJ/cm². Im Rahmen dieser Leistungs- und Dosis-Werte lassen sich flächenspezifische Bestrahlungszeiten zwischen maximal 2.000 s/cm² und minimal 8 ms/cm² realisieren.

Für eine Fertigungsanlage gemäß Abbildung 1 wurden kommerziell erwerbliche Einzelkomponenten eingesetzt, die dann modifiziert und auf einander abgestimmt wurden. Für die nachfolgend beschriebenen Beispiele des erfindungsgemäßen Verfahrens wurde als generative Fertigungsanlage ein NEO-3D-Drucker der Firma German RepRap GmbH, Deutschland verwendet, und nachfolgend NEO-Drucker genannt welcher für die Versuche umgebaut und angepasst wurde. Die ursprünglich im NEO-Drucker montierte Thermoplast-Filament-Dosiereinheit wurde durch eine Jetting-Düse der Firma Vermes Microdispensing GmbH, Otterfing, Deutschland ersetzt nachfolgend VERMES-Jetting-Düse, um höherviskose bis standfestpastöse Siliconkautschukmassen tröpfchenweise auf der Arbeitsplatte abscheiden zu können.

Weil der NEO-Drucker für die Installation von Jetting-Düsen nicht standardmäßig ausgerüstet war, musste er modifiziert werden.

Die VERMES-Jetting-Düse wurde so in die Drucker-Steuerung eingebunden, dass das Start-Stop-Signal (Triggersignal) der VERMES-Jetting-Düse von der GCode-Steuerung des NEO-Druckers betätigt wurde. Dazu wurde in der GCode-Steuerung ein spezielles Signal hinterlegt. Die GCode-Steuerung des Computers schaltete damit lediglich die VERMES-Jetting-Düse ein und aus (Start-und Stop der Dosierung).

Für die Signalübertragung des Start-Stop-Signals wurde das Heizkabel der ursprünglich installierten Filament-Heizdüse des NEO-Druckers getrennt und mit der VERMES-Jetting-Düse verschaltet.

Die übrigen Dosierparameter (Dosier-Frequenz, Rising, Falling usw.) der VERMES-Jetting-Düse wurden mittels der MDC 3200+ Microdispensing Control Unit eingestellt.

Die Steuerung des NEO-Druckers erfolgte mittels eines Computers. Die Software-Steuerung und Steuersignal-Anbindung des NEO-Druckers (Software: "Repitier-Host") wurde dahingehend modifiziert, dass damit sowohl die Bewegung der VERMES-Jetting-Düse in den drei Raumrichtungen gesteuert werden konnte als auch das Signal zur Tropfenabscheidung. Die für die Versuche eingestellte Verfahrgeschwindigkeit des modifizierten NEO-Druckers beträgt 0,01 m/s.

**Dosiersystem:** Als Dosiersystem für die verwendeten Siliconkautschukmassen diente das Microdispensing-Dosiersystem MDV 3200 A der Firma Vermes Microdispensing GmbH, Otterfing, Deutschland, nachfolgend VERMES-Dosiersystem genannt, bestehend aus einem Komplettsystem mit folgenden Komponenten: a) MDV 3200 A - Düseneinheit mit einem Anschluss für Luer-Lock Kartuschen, welche an der Kartuschen-Oberseite mit 3-8 bar Druckluft (Schlauch mit Adapter) beaufschlagt wurden, b) Vermes Begleit-Düsenheizungs-System MDH-230tfl links, c) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Puls, Heater, Düse, Abstand, Voxeldurchmesser, Luft-Vordruck an der Kartusche). Es stehen VERMES-Jetting-Düsen mit Durchmessern von 50, 100, 150 und 200 µm zur Verfügung. Damit konnten feinste Siliconkautschuktröpfchen im Nanoliter-Bereich auf jeder beliebigen x,y,z-Position der Basisplatte punktgenau platziert werden. Sofern nichts anderes angegeben ist, war in dem Vermes-Ventil als Standard-Düseneinsatz eine 200 µm-Düse eingebaut (Düseneinsatz N11-200).

Als Vorratsbehälter für die Siliconkautschukmasse dienten senkrecht stehende 30 ml Luer-Lock Kartuschen, die flüssigkeitsdicht an die Dispensing-Düse aufgeschraubt und mit Druckluft beaufschlagt wurden.

Die Steuerung des modifizierten NEO-Druckers und des VERMES-Dosiersystems erfolgte mit einem PC und einer Open-Source-Software "Repitier-Host".

### Strahlungsquellen:

### Hönle-Bluepoint

Für die UV-induzierte Additionsvernetzung der Siliconkautschukmassen wurde ein UV-Strahler "Bluepoint 4" der Firma Dr. Hönle AG, Gräfeling/München, Deutschland verwendet, nachfolgend BLUEPOINT-Bestrahlungssystem. Das BLUEPOINTBestrahlungssystem besteht aus einer Betriebseinheit und einer zugehörigen flexiblen Lichtleiter-Optik, die so justiert wurde, dass der austretende UV-A-Strahl auf die frisch abgeschiedene Tropfenlage des Bauteils fokussiert war. Der Strahlenausgang wurde so über den zu bestrahlenden Probekörpern justiert, dass der Abstand zwischen Strahlenausgang und Bauteil / Probekörper 10 mm betrug.

Das auf einem 150 W Hochdruckquecksilberstrahler basierende BLUEPOINT-Bestrahlungssystem ermöglicht bei einer Einstellung von 80 % der max. Intensität eine UV-A-Intensität von ca. 13200 mW/cm² und verfügt über einen Timer-Einstellbereich von 0,1 - 999,9 sec.

Die Kalibrierung des BLUEPOINT-Bestrahlungssystems erfolgte mit einem Omnicure R-200-Radiometer. Bei Einstellung von 80% der maximalen Bestrahlungsleistung am BLUEPOINT-Bestrahlungssystems wurde eine Bestrahlungsleistung von 13200 mW/cm² ermittelt.

### UV-Kammer mit Osram-UV-Lampe

Für Offline-UV-Bestrahlung von Bauteilen wurde eine UV-Bestrahlungskammer verwendet, die innen verspiegelt war und folgende Außen-Abmessungen hatte:

| | |
|---|---|
| Länge | 50 cm |
| Höhe | 19 cm |
| Breite | 33 cm |

Der Abstand zwischen der UV-Leuchtstofflampe und dem Substrat betrug 16 cm.

Strahlungsquelle: UV-Lampe mit 36 Watt elektrischer Leistung, Typ Osram Puritec HNS L 36 W 2G11,
Osram GmbH, Augsburg, Deutschland.

### IR-Strahlungsquelle

Für die IR-induzierte (thermische) Vernetzung wurde ein kurzwelliges-Infrarot-Modul IR-Spot der Firma OPTRON GmbH Garbsen/Hannover, Deutschland verwendet (Leistungsaufnahme 150 W). Der IR-Spot arbeitet im kurzwelligen IR-Spektrum mit dem Vorteil einer hohen Eindringtiefe der Strahlungsenergie. Bei einer Brennweite von 50 mm wird im Fokus ein Brennfleckdurchmesser von 10 mm erzeugt. Der IR-Spot verfügt über einen Leistungssteller, welcher eine Online-Leistungsverstellung im Druckprozess ermöglicht.

### Beispiele

Die folgenden Beispiele dienen der Erläuterung der Erfindung ohne diese zu beschränken. Für alle Beispiele wurde die oben beschriebene, umgebaute, Fertigungsanlage verwendet.

**Konditionierung der Siliconkautschukmassen:** Die verwendeten Siliconkautschukmassen wurden sämtlich vor der Verarbeitung entflüchtigt, indem 100 g der Masse in einer offenen PE-Dose in einem Exsikkator 3h bei einem Vakuum von 10 mbar und Raumtemperatur gelagert wurden. Anschließend wurde die Masse in eine 30ml-Kartusche mit Bajonettverschluss luftfrei abgefüllt und mit einem passenden Auspress-Stempel (Kunststoffkolben) verschlossen. Die Luer-Lock Kartusche wurde dann in die vertikale Kartuschenhalterung des Vermes-Dosierventils flüssigkeitsdicht mit der Luer-Lock-Verschraubung nach unten eingeschraubt und der Druck-Stempel an der Kartuschenoberseite mit 3-8 bar Druckluft beaufschlagt; der in der Kartusche befindliche Auspress-Stempel verhindert, dass die Druckluft in die zuvor evakuierte Siliconkautschukmasse gelangen kann.

Alle UV-empfindlichen Silicon-Massen wurden unter Gelblicht (unter Ausschluss von Licht unterhalb 700 nm) hergestellt, analog entflüchtigt und in lichtundurchlässige Semco-Kartuschen abgefüllt.

Die Viskosität der in den Beispielen verwendeten Silkonkautschukmassen ist aus Tabelle 2 zu entnehmen.

### Verwendete Rohstoffe und Siliconkautschukmassen:

**R1:** Vinylfunktionelles MQ-Siliconharzpulver bestehend aus M-, M^{Vinyl}- und Q-Einheiten im Verhältnis M : M^{Vinyl} : Q = 0,72 : 0,09 : 1 mit einem Molekulargewicht Mw = 5300 g/mol und Mn = 2400 g/mol und einem Vinylgehalt von 70 mmol Vinyl pro 100 g Siliconharz.
**R2:** Vinyldimethylsiloxy-endständiges Polydimethylsiloxan mit einer Viskosität von 200 mPa.s, erhältlich bei ABCR GmbH, Karlsruhe, Deutschland unter der Produktbezeichnung "Poly(dimethylsiloxane), vinyldimethylsiloxy terminated; viscosity 200 cSt.", Best.-Nr. AB109357, CAS-Nr. [68083-19-2].
**R3:** Vinyldimethylsiloxy-endständiges Polydimethylsiloxan mit einer Viskosität von 1.000 mPa.s, erhältlich bei ABCR GmbH, Karlsruhe, Deutschland unter der Produktbezeichnung "Poly(dimethylsiloxane), vinyldimethylsiloxy terminated; viscosity 1000 cSt.", Best.-Nr. AB109358, CAS-Nr. [68083-19-2].
**R4:** Vinyldimethylsiloxy-endständiges Polydimethylsiloxan mit einer Viskosität von 20.000 mPa.s, erhältlich bei ABCR GmbH, Karlsruhe, Deutschland unter der Produktbezeichnung "Poly(dimethylsiloxane), vinyldimethylsiloxy terminated; viscosity viscosity 20000 cSt.", Best.-Nr. AB128873, CAS [68083-19-2] (ABCR-Katalog).
**R5:** Methylhydrosiloxan-Dimethylsiloxan-Copolymer mit einem Molekulargewicht von Mn = 1.900-2.000 g/mol und einem Methylhydrogensiloxy-Gehalt von 25-30 Mol-%, erhältlich bei Gelest, Inc. (65933 Frankfurt am Main, Deutschland) unter der Produktbezeichnung HMS-301.
**R6:** Methylhydrosiloxan-Dimethylsiloxan-Copolymer mit einem Molekulargewicht von Mn = 900-1.200 g/mol und einem Methylhydrogensiloxy-Gehalt von 50-55 Mol-%, erhältlich bei Gelest, Inc. (65933 Frankfurt am Main, Deutschland) unter der Produktbezeichnung HMS-501.
**R7:** UV-aktivierbarer Platinkatalysator: Trimethyl-(methylcyclopentadienyl)-platin(IV), erhältlich bei Sigma-Aldrich®, Taufkirchen, Deutschland.
**R8:** SEMICOSIL® 988 1K, eine thermisch härtbare, transluzente, standfeste, additions-vernetzende Siliconkautschukmasse; mit einer dynamischen Viskosität von ca. 450.000 mPa.s (bei 0,5 s⁻¹ und 25°C) nach DIN EN ISO 3219 (erhältlich bei WACKER CHEMIE AG, München, Deutschland).
**R9:** Eine Hydrophobierte pyrogene Kieselsäure mit einer BET-Oberfläche von 300 m2/g wurde hergestellt analog der Patentschrift DE 38 39 900 A1 durch Hydrophobierung aus einer hydrophilen pyrogenen Kieselsäure Wacker HDK® T-30 (erhältlich bei WACKER CHEMIE AG, München, Deutschland).
**R10:** SEMICOSIL® 914 UV-THIXO A+B, eine durch UV-Licht induziert additions-vernetzende, transparente, thixotrope 2K-Siliconkautschukmasse mit einer Misch-Viskosität von ca. 42.000 mPa.s (bei 0,5 s⁻¹ und 25°C) nach DIN EN ISO 3219 und einer Vulkanisathärte Shore A von 70 (erhältlich bei WACKER CHEMIE AG, München, Deutschland).
**R11:** (3-Glycidoxypropyl)trimethoxysilane, 98%, erhältlich bei ABCR GmbH, Karlsruhe, Deutschland, CAS-Nr. [2530-83-8]

### Beispiel 1:

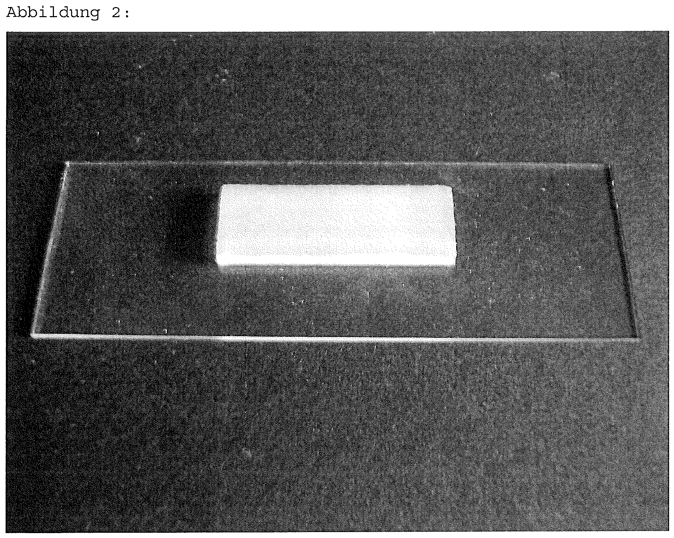

R8 wurde mit den in Tabelle 1 angegebenen Jetting-Düsenparametern auf einem Glas-Objektträger (3) der Fläche 25 x 75 mm tröpfchenweise zu einer 10 x 30 mm messenden Schicht abgeschieden. Die hohe Nullscherviskosität und Fließgrenze der Siliconkautschukmasse ermöglicht eine ausreichende Formstabilität der abgeschiedenen Schicht. Anschließend wurde die Schicht mittels IR-Strahlung vernetzt, indem der IR-Spot im Abstand von 50 mm während 1 min. bei einer Leistungsstellung von 40% mittig über die Länge der Schicht geführt wurde. Dieser Vorgang, also abwechselndes Jetting und Vernetzen, wurde solange wiederholt, bis der quaderförmige Formkörper (8) eine Höhe von 3 mm erreicht hatte. Es resultierte ein transparenter elastischer Formkörper (8) mit den Abmessungen 10 x 30 x 3 mm die denen gemäß Abbildung 2 entsprechen.

### Beispiel 2:

Es wurde eine Siliconmasse hergestellt aus
- 51 Gew. % R4
- 25 Gew. % R9
- 9 Gew. % R3
- 11 Gew. % R2
- 2,0 Gew. % R11

Anschließend wurden unter Lichtausschluss
- R7, 30 ppm bez. auf den Platin-Gehalt der Gesamtmischung
- 2,4 Gew. % R6
zugegeben, die resultierende Gesamtmischung homogenisiert, wie oben beschrieben entflüchtigt und in lichtdichte 30 ml-Kartuschen abgefüllt.

Die Siliconmasse wurde mit den in Tabelle 1 angegebenen Jetting-Düsenparametern auf einem Glas-Objektträger der Fläche 25 x 75 mm tröpfchenweise (Voxeldurchmesser: 0,5 mm) zu einer 15 x 15 mm messenden Schicht wiederholt abgeschieden und die abgeschiedene Masse während des gesamten Druckvorgangs (50 sec) mit dem BLUEPOINT-Bestrahlungssystem mit einer Leistung von 13.200 mW/cm² kontinuierlich bestrahlt. Man erhielt auf diese Weise transparente quaderförmige Formkörper (8) mit den Abmessungen 15 x 15 x 3 mm.

### Beispiel 3:

Es wurde eine Siliconmasse hergestellt aus
- 51 Gew. % R4
- 25 Gew. % R9
- 20 Gew. % R3
- 11 Gew. % R2
- 2 Gew. % R11

Anschließend wurden unter Lichtausschluss
- R7, 30 ppm bez. auf den Platin-Gehalt der Gesamtmischung
- 2,9 Gew. % R5
zugegeben, die resultierende Gesamtmischung homogenisiert, wie oben beschrieben entflüchtigt und in lichtdichte 30 ml-Kartuschen abgefüllt.

Die Siliconmasse wurde mit den in Tabelle 1 angegebenen Jetting-Düsenparametern auf einem Glas-Objektträger (3) der Fläche 25 x 75 mm tröpfchenweise (Voxeldurchmesser: 0,5 mm) zu einer 11 x 11 mm messenden Schicht wiederholt abgeschieden und die abgeschiedene Masse während des gesamten Druckvorgangs (10 Minuten) mit dem BLUEPOINT-Bestrahlungssystem mit einer Leistung von 13.200 mW/cm² kontinuierlich bestrahlt. Man erhielt auf diese Weise transparente quaderförmige Formkörper (8) mit den Abmessungen 11 x 11 x 8 mm.

### Beispiel 4:

Es wurde eine Siliconmasse hergestellt aus
- 54 Gew. % R4
- 25 Gew. % R9
- 20 Gew. % R3
- 11 Gew. % R2

Anschließend wurden unter Lichtausschluß
- R7, 30 ppm bez. auf den Platin-Gehalt der Gesamtmischung
- 1,8 Gew. % R6
zugegeben, die resultierende Gesamtmischung homogenisiert, wie oben beschrieben entflüchtigt und in lichtdichte 30 ml-Kartuschen abgefüllt.

Die Siliconmasse wurde mit den in Tabelle 1 angegebenen Jetting-Düsenparametern auf einem Glas-Objektträger (3) der Fläche 25 x 75 mm tröpfchenweise (Voxeldurchmesser: 0,9 mm) zu einer 11 x 11 mm messenden Schicht wiederholt abgeschieden und die abgeschiedene Masse während des gesamten Druckvorgangs (10 Minuten) mit dem BLUEPOINT-Bestrahlungssystem mit einer Leistung von 13.200 mW/cm² kontinuierlich bestrahlt. Man erhielt auf diese Weise transparente quaderförmige Formkörper (8) mit den Abmessungen 11 x 11 x 8 mm.

### Beispiel 5:

R10 wurde mit den in Tabelle 1 angegebenen Jetting-Düsenparametern auf einem Glas-Objektträger (3) der Fläche 25 x 75 mm tröpfchenweise (Voxeldurchmesser: 0,7 mm) zu einer 15 x 15 mm messenden Schicht wiederholt abgeschieden und die abgeschiedene Masse während des gesamten Druckvorgangs (50 sec) mit dem BLUEPOINT-Bestrahlungssystem mit einer Leistung von 13.200 mW/cm² kontinuierlich bestrahlt. Man erhielt auf diese Weise quaderförmige Formkörper (8) mit den Abmessungen 15 x 15 x 3 mm.

### Beispiel 6:

Es wurde eine Siliconmasse hergestellt aus
- 27 Gew. % R1
- 40 Gew. % R4
- 14 Gew. % R3
- 1 Gew. % R11

Die Vormischung wurde solange gemischt, bis sich R1 aufgelöst hatte und die Masse völlig homogen und transparent war. Anschließend wurden unter Lichtausschluss
- 18 Gew.-% R5
- R7, 30 ppm bez. auf d. Platin-Gehalt der Gesamtmischung zugegeben und die resultierende Gesamtmischung wie oben beschrieben entflüchtigt und in lichtdichte Kartuschen abgefüllt.

Die Siliconmasse wurde mit den in Tabelle 1 angegebenen Jetting-Düsenparametern auf einem Glas-Objektträger (3) der Fläche 25 x 75 mm tröpfchenweise (Voxeldurchmesser: 1,5 mm) zu einer 15 x 15 mm messenden Schicht wiederholt abgeschieden und die abgeschiedene Masse während des gesamten Druckvorgangs (50 sec) mit dem BLUEPOINT-Bestrahlungssystem mit einer Leistung von 13.200 mW/cm² kontinuierlich bestrahlt. Man erhielt auf diese Weise völlig transparente quaderförmige Formkörper (8) mit den Abmessungen 15 x 15 x 3 mm.

### Beispiel 7:

Es wurde eine Siliconmasse hergestellt aus
- 45 Gew. % R1
- 38 Gew. % R4
- 9 Gew. % R3

Die Vormischung wurde solange gemischt, bis sich R1 aufgelöst hatte und die Masse völlig homogen und transparent war. Anschließend wurden unter Lichtausschluss
- 8 Gew.-% R6
- R7, 30 ppm bez. auf d. Platin-Gehalt der Gesamtmischung zugegeben und die resultierende Gesamtmischung wie oben beschrieben entflüchtigt und in lichtdichte Kartuschen abgefüllt.

Die Siliconmasse wurde mit den in Tabelle 1 angegebenen Jetting-Düsenparametern auf einem Glas-Objektträger (3)der Fläche 25 x 75 mm tröpfchenweise (Voxeldurchmesser: 1,1 mm) zu einer 15 x 15 mm messenden Schicht wiederholt abgeschieden und die abgeschiedene Masse während des gesamten Druckvorgangs (50 sec) mit dem BLUEPOINT-Bestrahlungssystem mit einer Leistung von 13.200 mW/cm² kontinuierlich bestrahlt. Man erhielt auf diese Weise völlig transparente quaderförmige Formkörper (8) mit den Abmessungen 15 x 15 x 3 mm.

### Beispiel 8:

Es wurde eine Siliconmasse hergestellt aus
- 44 Gew. % R1
- 38 Gew. % R4
- 9 Gew. % R3
- 1 Gew. % R11

Die Vormischung wurde solange gemischt, bis sich R1 aufgelöst hatte und die Masse völlig homogen und transparent war. Anschließend wurden unter Lichtausschluss
- 8 Gew.-% R6
- R7, 30 ppm bez. auf d. Platin-Gehalt der Gesamtmischung zugegeben und die resultierende Gesamtmischung wie oben beschrieben entflüchtigt und in lichtdichte Kartuschen abgefüllt.

Die Siliconmasse wurde mit den in Tabelle 1 angegebenen Jetting-Düsenparametern auf einem Glas-Objektträger (3)der Fläche 25 x 75 mm tröpfchenweise (Voxeldurchmesser: 1,0 mm) zu einer 15 x 15 mm messenden Schicht wiederholt abgeschieden und die abgeschiedene Masse während des gesamten Druckvorgangs (50 sec) mit dem BLUEPOINT-Bestrahlungssystem mit einer Leistung von 13.200 mW/cm² kontinuierlich bestrahlt. Man erhielt auf diese Weise völlig transparente quaderförmige Formkörper (8) mit den Abmessungen 15 x 15 x 3 mm.

### Beispiel 9:

Es wurde eine Siliconmasse hergestellt aus
- 39 Gew. % R1
- 44 Gew. % R3
- 2 Gew. % R11

Die Vormischung wurde solange gemischt, bis sich R1 aufgelöst hatte und die Masse völlig homogen und transparent war. Anschließend wurden unter Lichtausschluss
- 15 Gew.-% R5
- R7, 30 ppm bez. auf d. Platin-Gehalt der Gesamtmischung zugegeben und die resultierende Gesamtmischung wie oben beschrieben entflüchtigt und unter Luftausschluss in lichtdichte Kartuschen abgefüllt.

Die Siliconmasse wurde mit den in Tabelle 1 angegebenen Jetting-Düsenparametern auf einem Glas-Objektträger (3) der Fläche 25 x 75 mm tröpfchenweise (Voxeldurchmesser: 1,7 mm) zu einer 15 x 15 mm messenden Schicht wiederholt abgeschieden und während des gesamten Druckvorgangs (50 sec) mit dem BLUEPOINT-Bestrahlungssystem mit einer Leistung von 13.200 mW/cm² kontinuierlich bestrahlt. Man erhielt auf diese Weise völlig transparente quaderförmige Formkörper (8) mit den Abmessungen 15 x 15 x 3 mm.

**Beispiel 10:** Beispiel 8 mit nichtentflüchtigter Siliconmasse R8 Es wurde die Masse R8 verwendet und diese wurde vor der Abfüllung in die Kartusche nicht unter Vakuum entflüchtigt. R8 wurde mit den in Tabelle 1 angegebenen Jetting-Düsenparametern auf einem Glas-Objektträger (3) der Fläche 25 x 75 mm tröpfchenweise zu einer 20 x 20 mm messenden unvernetzten Schicht abgeschieden. Diese Abscheidung der Schicht wurde so oft wiederholt, bis der quaderförmige Formkörper eine Höhe von 12 mm erreicht hatte. Die hohe Nullscherviskosität und Fließgrenze der Siliconkautschukmasse ermöglichte eine ausreichende Formstabilität des abgeschiedenen unvernetzten Formkörpers.

Der Objektträger (3) mit dem darauf befindlichen unvernetzten Formkörper wurde anschließend bei 150° C und Normaldruck 30 Minuten lang thermisch vernetzt.

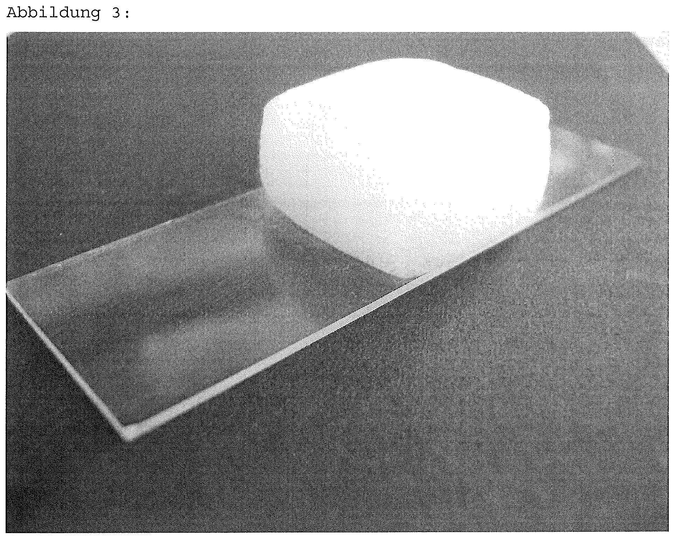

Es resultierte ein opak-weißer, elastischer Formkörper (8) mit den Abmessungen 20 x 20 x 12 mm (L x B x H), welcher völlig mit kleinen Luftbläschen durchsetzt war ähnlich einem geschlossenzelligen Elastomerschaumkörper. Die vier Seiten und die Oberseite waren aufgewölbt (siehe Abbildung 3).

### Beispiel 11: Beispiel 9 mit nichtentflüchtigter Masse aus Beispiel 2 Sem. 810 UV

Das Beispiel 2 wurde wiederholt mit dem einzigen Unterschied, dass die Masse vor der Abfüllung in die Kartusche nicht unter Vakuum entflüchtigt wurde.

Es resultierte ein opak-weißer elastischer Formkörper (8) mit den Abmessungen 10 x 30 x 3 mm, welcher völlig mit kleinen Luftbläschen durchsetzt war. Die vier Seiten und die Oberseite waren geringfügig aufgewölbt und der Formkörper (8) war mit kleinen Blasen durchsetzt.

### Beispiel 12: Herstellung eines dreidimensionalen "Wacker"-Schriftzugs mit Siliconmasse aus Beispiel 2

Aus einer CAD-Datei mit einem dreidimensionalen "Wacker"-Firmenschriftzug wurde eine STL-Datei erstellt (mittels Software "ProEngineer" von PTC), daraus wurde ein GCode generiert (mittels der Software "Slic3r"). Mit der Software "RepitierHost" wurde auf dem umgebauten NEO-Drucker die Siliconmasse aus Beispiel 2 tröpfchenweise zu einem dreidimensionalen "Wacker"-Firmenschriftzug schichtweise abgeschieden.

Als Druckunterlage (8) diente eine 2 mm dicke PTFE-Platte mit den Abmessungen 2 mm X 150 X 150 mm.

Während des gesamten Druckvorgangs wurde die abgeschiedene Masse mit dem BLUEPOINT-Bestrahlungssystems mit einer Leistung von 13.200 mW/cm² kontinuierlich bestrahlt.

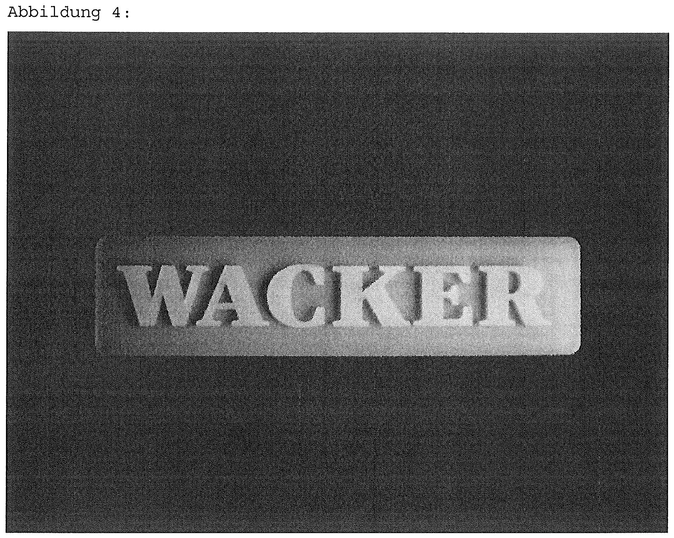

Man erhielt auf diese Weise einen dreidimensionalen vernetzten Siliconelastomer-Körper (8) mit den Gesamt-Abmessungen 85 mm x 25 mm x 5 mm (Länge X Breite X Gesamthöhe). Der erhaltene Formkörper ist in Abbildung 4 zu sehen.

### Beispiel 13: (3D-Druck im Vakuum)

Das Beispiel 8 mit der nichtentflüchtigten Siliconmasse R8 wurde analog wiederholt, nur dass der gesamte 3D-Druck-Vorgang des unvernetzten Roh-Formkörpers im Vakuum bei 130 mbar stattfand:
Die oben beschriebene, umgebaute, erfindungsgemäße Fertigungsanlage wurde zusätzlich in eine Vakuumkammer gestellt. Alle Strom- und Medienleitungen (Druckluftleitung und Kabel) führten vom Drucker vakuumdicht nach außen, wo sich die VERMES-Steuereinheit, der PC und die Druckluft- und Stromversorgung befanden. Auf diese Weise konnte die erfindungsgemäße Fertigungsanlage von außen gestartet und bedient werden und auch der Druckprozess vollständig von außen gesteuert werden. Die erfindungsgemäße Fertigungsanlage arbeitete innerhalb der Vakuumkammer bei dem eingestellten Vakuum.

Als Vakuumkammer diente ein trommelförmiger Vakuumholztrockner der Fa. Eberl, Deutschland mit 2 Meter Durchmesser und 3 Meter Länge, an den eine Vakuumpumpe angeschlossen war.

Die Vakuumkammer hatte innen Raumtemperatur von 23 °C.

Nachdem die Vakuum-Kammer mit der darin befindlichen erfindungsgemäßen Fertigungsanlage auf einen Druck von 130 mbar evakuiert war, wurde der 3D-Druckvorgang gestartet.

Die nichtentflüchtigte Siliconmasse R7 wurde mit den in Tabelle 1 angegebenen Jetting-Düsenparametern auf einem Glas-Objektträger (8) der Fläche 25 x 75 mm tröpfchenweise zu einer 11 x 11 mm X 8 mm (L x B x H) messenden Schicht abgeschieden. Die hohe Nullscherviskosität und Fließgrenze der Siliconkautschukmasse ermöglicht eine ausreichende Formstabilität der abgeschiedenen Schicht.

Anschließend wurde das Vakuum gebrochen, der formstabile unvernetzte Quader entnommen und in einem Trockenofen bei 150° C während 30 Minuten thermisch vernetzt. Es resultierte ein blasenfreier, völlig transparenter, elastischer quaderförmiger Formkörper (8) mit den Abmessungen 11 x 11 x 8 mm.

### Beispiel 14: (3D-Druck im Vakuum)

Beispiel 10 wurde analog wiederholt wobei eine nichtentflüchtigte Siliconmasse mit der Zusammensetzung analog zu Beispiel 2 verwendet wurde.

Die nichtentflüchtigte Siliconmasse wurde mit den in Tabelle 1, Beispiel 2 angegebenen Jetting-Düsenparametern auf einem Glas-Objektträger (3) der Fläche 25 x 75 mm tröpfchenweise zu einer 15 x 15 mm X 3 mm (L x B x H) messenden Schicht abgeschieden. Die hohe Nullscherviskosität und Fließgrenze der Siliconkautschukmasse ermöglicht eine ausreichende Formstabilität der abgeschiedenen Schicht.

Anschließend wurde der formstabile unvernetzte Quader unter UV-Licht des BLUEPOINT-Bestrahlungssystems mit einer Strahlungsleistung von 10 Sekunden bestrahlt. Es resultierte ein blasenfreier, transparenter elastischer quaderförmiger Formkörper (8) mit den Abmessungen 15 x 15 x 3 mm.

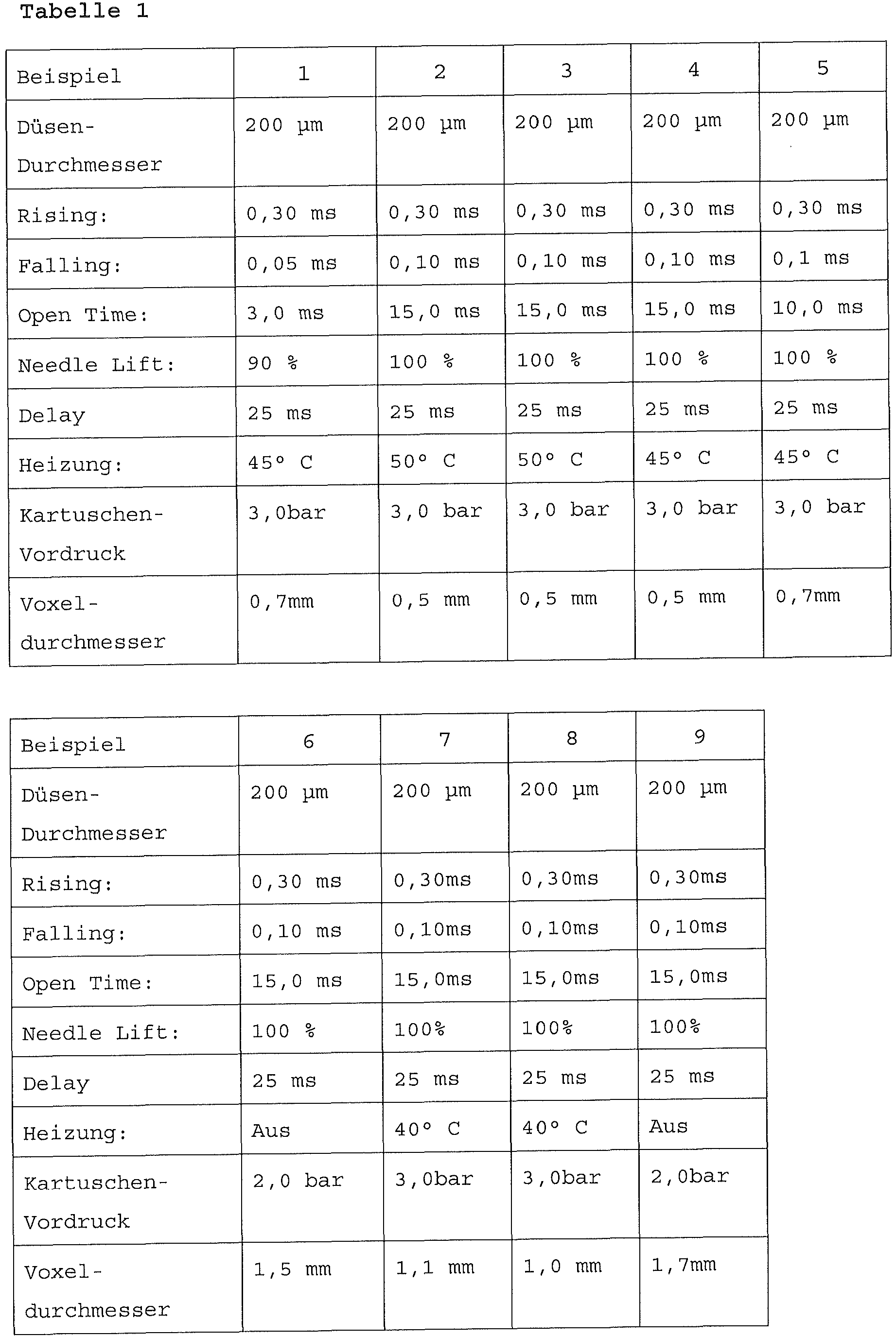

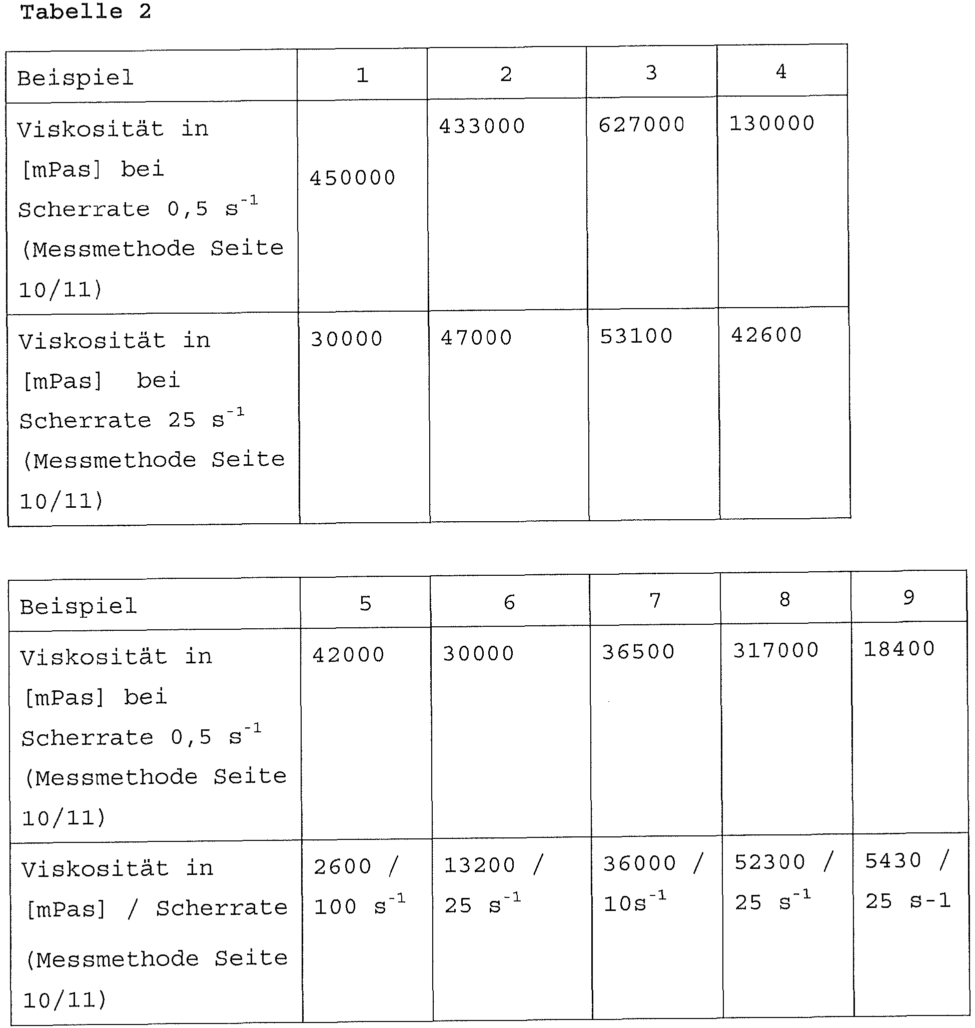

## Patentansprüche

1. Verfahren zur schichtweisen Herstellung von Siliconelastomerformteilen (8) mit folgenden Schritten:
1) Über eine unabhängig steuerbare Jetting-Vorrichtung (1) erfolgt in der x,y-Arbeitsebene das tropfenweise Aufbringen (6) mindestens einer durch elektromagnetische Strahlung härtbaren Siliconkautschukmasse aus einem Reservoir (4) über mindestens einen Druckkopf (5) auf eine unabhängig räumlich steuerbare Basisplatte (3) oder einen darauf befestigten Formkörper.
2) Über mindestens eine unabhängig steuerbare Quelle für elektromagnetische Strahlung (2) erfolgt die Vernetzung oder Anvernetzung (7) des oder der Tropfen (6), so dass eine Schicht des gehärteten oder teilgehärteten Siliconelastomerformteils entsteht.
3) Die Jetting-Vorrichtung (1) oder das Siliconelastomerformteil aus dem 2. Schritt wird nur soweit in z-Richtung verschoben, so dass die nächste Tropfen-Schicht (6) in der x,y-Arbeitsebene aufgetragen werden kann.
4) Die Schritte 1. bis 3. werden wiederholt, bis das Siliconelastomerformteil (8) komplett aufgebaut ist,
wobei
a) die verwendete Siliconkautschukmasse additionsvernetzend ist und ein- oder mehrkomponentig formuliert ist, wobei mehrkomponentige Siliconkautschukmassen durch Einrichtungen, die dem Reservoir (4) vor- oder nachgeschaltet sind, homogen vermischt werden, und mittels elektromagnetischer Strahlung (7) im 2.Schritt entweder thermisch und/oder durch UV- oder UV-VIS-Licht induziert vernetzt wird,
b) die Silikonkautschukmasse eine Viskosität von mindestens 10 Pa·s aufweist, gemessen nach DIN EN ISO 3219: 1994 und DIN 53019 mittels eines kalibrierten Rheometers mit einem Kegel-Platte-System, Kegel CP50-2, mit einem Öffnungswinkel von 2° bei 25°C +/- 0,05 °C, einer Scherrate von 0,5 s⁻¹ und einer Messzeit von 3 min, wobei die Viskositätsangabe der arithmetische Mittelwert von drei unabhängig durchgeführten Einzelmessungen darstellt,
c) die Einwirkung der elektromagnetischen Strahlung (7) auf die Tropfen (6) in der x,y-Arbeitsebene ortsselektiv oder flächig, gepulst oder kontinuierlich sowie mit konstanter oder veränderlicher Intensität erfolgt, und
d) die Schritte 1) und 2) und 3) unabhängig voneinander oder aneinander gekoppelt, gleichzeitig oder hintereinander in beliebiger Reihenfolge erfolgen.

2. Verfahren gemäß Anspruch 1, **dadurch gekennzeichnet, dass** die verwendete Silikonkautschukmasse eine Viskosität von mindestens 40 Pa·s aufweist, gemessen bei 25°C und einer Scherrate von 0,5 s⁻¹ mit der Methode wie in dem Anspruch 1 offenbart.

3. Verfahren gemäß einem der Ansprüche 1 oder 2 **dadurch gekennzeichnet, dass** die verwendete Silikonkautschukmasse eine Viskosität von mindestens 100 Pa·s aufweist, gemessen bei 25°C und einer Scherrate von 0,5 s⁻¹ mit der Methode wie in dem Anspruch 1 offenbart.

4. Verfahren gemäß einem der Ansprüche 1 bis 3 **dadurch gekennzeichnet, dass** die verwendete Silikonkautschukmasse eine Viskosität von mindestens 200 Pa·s aufweist, gemessen bei 25°C und einer Scherrate von 0,5 s⁻¹ mit der Methode wie in dem Anspruch 1 offenbart.

5. Verfahren gemäß einem der Ansprüche 1 bis 4 **dadurch gekennzeichnet, dass** die elektromagnetischer Strahlung (7) im Schritt 2) UV-VIS-Licht der Wellenlänge 240 bis 500 nm ist.

6. Verfahren gemäß einem der Ansprüche 1 bis 5 **dadurch gekennzeichnet, dass** die elektromagnetischer Strahlung (7) im Schritt 2) UV-VIS-Licht der Wellenlänge 250 bis 400 nm ist.

7. Verfahren gemäß einem der Ansprüche 1 bis 6, **dadurch gekennzeichnet, dass** die elektromagnetischer Strahlung (7) im Schritt 2) UV-VIS-Licht der Wellenlänge 250 bis 350 nm ist.

## Claims

1. Process for the layer-by-layer production of shaped silicone elastomer parts (8), with steps as follows:
1) An independently controllable jetting apparatus (1) is used for dropwise application (6) in the x, y work plane of at least one silicone rubber composition curable by electromagnetic radiation from a reservoir (4), via at least one printing head (5), to an independently spatially controllable baseplate (3) or to a shaped body affixed thereto.
2) At least one independently controllable source of electromagnetic radiation (2) is used for crosslinking or incipient crosslinking (7) of the drop or drops (6), to form a layer of the cured or partially cured shaped silicone elastomer part.
3) The jetting apparatus (1) or the shaped silicone elastomer part from step 2 is displaced in the z-direction only far enough that the next drop layer (6) can be applied in the x, y work plane.
4) Steps 1 to 3 are repeated until construction of the shaped silicone elastomer part (8) is complete,
where
a) the silicone rubber composition used is addition-crosslinking and is formulated as a one-component or multicomponent system, where multicomponent silicone rubber compositions are homogeneously mixed by devices upstream or downstream of the reservoir (4), and is crosslinked in step 2 by means of electromagnetic radiation (7) with induction either thermally and/or by UV or UV-VIS light,
b) the silicone rubber composition has a viscosity of at least 10 Pa.s, measured according to DIN EN ISO 3219: 1994 and DIN 53019 by means of a calibrated rheometer with a cone/plate system, CP50-2 cone, with an opening angle of 2° at 25° C +/- 0.05° C, a shear rate of 0.5 s⁻¹ and a measuring time of 3 min, where the viscosity data represents the arithmetic mean of three independently conducted individual measurements,
c) the drops (6) in the x, y work plane are exposed to the electromagnetic radiation (7) site-selectively or areally, in pulses or continuously, and with constant or variable intensity, and
d) steps 1) and 2) and 3) take place independently of one another or coupled to one another, simultaneously or in succession in any order.

2. Process according to Claim 1, **characterized in that** the silicone rubber composition used has a viscosity of at least 40 Pa.s, measured at 25°C and a shear rate of 0.5 s⁻¹ by the method as disclosed in Claim 1.

3. Process according to either of Claims 1 and 2, **characterized in that** the silicone rubber composition used has a viscosity of at least 100 Pa.s, measured at 25°C and a shear rate of 0.5 s^{- 1} by the method as disclosed in Claim 1.

4. Process according to any of Claims 1 to 3, **characterized in that** the silicone rubber composition used has a viscosity of at least 200 Pa.s, measured at 25°C and a shear rate of 0.5 s^{- 1} by the method as disclosed in Claim 1.

5. Process according to any of Claims 1 to 4, **characterized in that** the electromagnetic radiation (7) in step 2) is UV-VIS light of wavelength 240 to 500 nm.

6. Process according to any of Claims 1 to 5, **characterized in that** the electromagnetic radiation (7) in step 2) is UV-VIS light of wavelength 250 to 400 nm.

7. Process according to any of Claims 1 to 6, **characterized in that** the electromagnetic radiation (7) in step 2) is UV-VIS light of wavelength 250 to 350 nm.

## Revendications

1. Procédé de fabrication en couches de pièces moulées en élastomère de silicone (8), comprenant les étapes suivantes :
1) l'application goutte-à-goutte (6) d'au moins une masse de caoutchouc de silicone durcissable par un rayonnement électromagnétique a lieu par un dispositif de projection ajustable indépendamment (1) dans le plan de travail x,y à partir d'un réservoir (4) par le biais d'au moins une tête d'impression (5) sur une plaque de base (3) ajustable indépendamment dans l'espace ou un corps moulé fixé sur celle-ci,
2) la réticulation ou la réticulation partielle (7) de la ou des gouttes (6) a lieu par au moins une source ajustable indépendamment pour un rayonnement électromagnétique (2), de telle sorte qu'une couche de la pièce moulée en élastomère de silicone durcie ou partiellement durcie se forme,
3) le dispositif de projection (1) ou la pièce moulée en élastomère de silicone de l'étape 2 est décalée dans la direction z uniquement de telle sorte que la couche de gouttes suivante (6) puisse être appliquée dans le plan de travail x,y,
4) les étapes 1 à 3 sont répétées jusqu'à ce que la pièce moulée en élastomère de silicone (8) ait été complètement formée,
a) la masse de caoutchouc de silicone utilisée étant réticulante par addition et étant formulée à un ou plusieurs composants, des masses de caoutchouc de silicone multicomposantes étant mélangées de manière homogène par des dispositifs qui sont raccordés en amont ou en aval du réservoir (4), et étant réticulée au moyen d'un rayonnement électromagnétique (7) à l'étape 2 avec induction thermique et/ou par de la lumière UV ou UV-VIS,
b) la masse de caoutchouc de silicone présentant une viscosité d'au moins 10 Pa·s, mesurée selon DIN EN ISO 3219:1994 et DIN 53019 au moyen d'un rhéomètre calibré à système cône-plan, cône CP50-2, avec un angle d'ouverture de 2° à 25 °C ± 0,05 °C, un taux de cisaillement de 0,5 s^{- 1} et un temps de mesure de 3 minutes, la donnée de viscosité étant la valeur moyenne arithmétique de trois mesures individuelles réalisées indépendamment,
c) l'action du rayonnement électromagnétique (7) sur les gouttes (6) dans le plan de travail x,y ayant lieu de manière sélective à l'emplacement ou sur l'ensemble de la surface, sous forme pulsée ou continue, et avec une intensité constante ou variable, et
d) les étapes 1) et 2) et 3) ayant lieu indépendamment les unes des autres ou couplées les unes aux autres, simultanément ou successivement dans un ordre quelconque.

2. Procédé selon la revendication 1, **caractérisé en ce que** la masse de caoutchouc de silicone utilisée présente une viscosité d'au moins 40 Pa·s, mesurée à 25 °C et à un taux de cisaillement de 0,5 s⁻¹ avec la méthode telle que décrite dans la revendication 1.

3. Procédé selon l'une quelconque des revendications 1 ou 2, **caractérisé en ce que** la masse de caoutchouc de silicone utilisée présente une viscosité d'au moins 100 Pa·s, mesurée à 25 °C et à un taux de cisaillement de 0,5 s⁻¹ avec la méthode telle que décrite dans la revendication 1.

4. Procédé selon l'une quelconque des revendications 1 à 3, **caractérisé en ce que** la masse de caoutchouc de silicone utilisée présente une viscosité d'au moins 200 Pa·s, mesurée à 25 °C et à un taux de cisaillement de 0,5 s⁻¹ avec la méthode telle que décrite dans la revendication 1.

5. Procédé selon l'une quelconque des revendications 1 à 4, **caractérisé en ce que** le rayonnement électromagnétique (7) à l'étape 2) est de la lumière UV-vis d'une longueur d'onde de 240 à 500 nm.

6. Procédé selon l'une quelconque des revendications 1 à 5, **caractérisé en ce que** le rayonnement électromagnétique (7) à l'étape 2) est de la lumière UV-vis d'une longueur d'onde de 250 à 400 nm.

7. Procédé selon l'une quelconque des revendications 1 à 6, **caractérisé en ce que** le rayonnement électromagnétique (7) à l'étape 2) est de la lumière UV-vis d'une longueur d'onde de 250 à 350 nm.
